# EUROPEAN PATENT APPLICATION

(11) **EP 2 413 618 A2**
(43) Date of publication of application: **01.02.2012**
(21) Application number: 10756350.4
(22) Date of filing: 24.03.2010
(51) Int. Cl.: H04W 4/18, H04W 88/06

(54) **FEMTOCELL ACCESS NODE, FEMTOCELL SYSTEM, AND DATA TRANSMISSION METHOD FOR THE SYSTEM**

(30) Priority: 24.03.2009 KR 20090025096
(71) Applicant: Pantech Co., Ltd., Seoul 121-792 (KR)
(72) Inventor: SUH, Sung Jin, Seoul 137-070 (KR); YOON, Sung Jun, Seoul 133-112 (KR); JUNG, Myung Cheul, Seoul 156-032 (KR)
(74) Representative: Jordan, Volker Otto Wilhelm
(86) International application number: PCT/KR2010/001803
(87) International publication number: WO 2010/110595

(57) **Abstract**

A femto cell connection node, a femto cell system, and a data transmission method of the system are disclosed.

In the case where a sending terminal is willing to transmit data to a receiving terminal, a femto cell connection node of the sending side checks a present connection state of the receiving terminal and determines a transmission format of the data to be transmitted from the sending terminal to the receiving terminal according to the checked connection state. In particular, in the present disclosure, in the case where the receiving terminal is in a state of being directly or indirectly connectable to an Internet Protocol (IP) network, the data is transmitted to the receiving terminal after changing only a protocol portion L1/L2 so that the data may pass through the IP network.

According to the present disclosure, a load of a core network is reduced to increase an overall receiving capacity of the system and to shorten a path of data traffic.

## Description

### [Technical Field]

The present disclosure relates to a femto cell, and particularly to, a femto cell connection node connected to an Internet Protocol (IP) network such as Home eNodeB (HeNB), a system including the same, and a data transmission method of the system.

### [Background Art]

A femto cell is an ultra-small/low-power indoor base station providing mobile communication service to a region with a radius of approximate 200 m, and is generally installed at a region where the waves of a macro cell is deteriorated or at a shading region such as houses or offices to compensate the quality of mobile communication service.

Such a femto cell uses a widely used Internet line for the communication with a core network which is a core control station, which ensures low installation costs and low maintenance costs. In addition, since the femto cell may be installed at any place where an Internet line is installed, the femto cell is excellent in mobility. Since the femto cell may reinforce the coverage of the cell and enhance the quality of voice service, mobile communication service providers are expected to provide data service using the femto cell so that subscribers may perfectly adapt to 3G.

In relation to the femto cell, various network architectures are considered. In order to manage 1 million or more femto cells, scalable system architectures are necessary.

However, since there is no standard supporting femto cell solutions at the present, the standardization of femto cells becomes an issue at various standardization organizations.

In case of 3GPP, the femto cell standardization is under progress under the name of Home NodeB (HNB) in the Wideband Code Division Multiple Access (WCDMA) network and under the name of Home eNodeB (HeNB) in the Long Term Evolution (LTE) network.

The systems using femto cells have features in that a connection node, representatively HeNB is not connected to a dedicated line of a mobile communication service provider but directly connected to a widely used Internet Protocol (IP) network.

Since the HeNB is directly connected to the IP network, various advantages are on the rise. First, an ultrahigh speed IP network already installed indoors may be utilized, and therefore easy installation and operation are allowed. In aspect of costs, it is cheaper to use a dedicated network for wireless communications.

In addition, it is advantageous that services using IP such as voice over IP (VoIP) and IP television (IPTV) may be easily combined. Such architecture may be easily applied to the evolution of present technologies and service to provide new-type service in combination with various wired/wireless communication services. Here, the IP network is distinguished from the core network and supports packet service.

However, in the case where a terminal connected to an existing HeNB performs data communication, data traffic always pass the core network of the mobile communication system.

In other words, in the case where a terminal connected to HeNB communicates with a server connected to an IP network, the data traffic path is in the order of a terminal → a wireless region → a connection node → an IP network → a core network → the IP network → the corresponding server. In addition, even in the case where an A terminal connected to HeNB intends to transmit data to an opponent B terminal connected to another HeNB, the data traffic path is similarly in the order of the A terminal → the wireless region → HeNB→ the IP network → the core network → the IP network → HeNB → the B terminal. In other words, in the case of a terminal connected to HeNB provided by a mobile communication service provider, the form of data should be changed to an agreed form between the HeNB and the core network and then transmitted so as to pass via the core network provided by the mobile communication service provider.

As described above, in the femto cell system, as the data traffic path between terminals unconditionally passes via the core network of a mobile communication service provider without any optimizing process, even though the data traffic path may be implemented in various ways, the load of the core network unnecessarily increases, and accordingly the overall receiving capacity of the system decreases.

### [Disclosure]

### [Technical Problem]

The present disclosure is directed to providing a femto cell connection node capable of reducing a load of a core network by allowing direct connection through an Internet Protocol (IP) network without passing via the core network of a mobile communication service provider, thereby increasing an overall receiving capacity of a system, a femto cell system, and a data transmission method of the system.

The present disclosure is also directed to providing a femto cell connection node capable of reducing data delay by decreasing an unnecessary data path and shortening a data traffic path, a femto cell system and a data transmission method of the system.

Technical objects to be accomplished by the present disclosure are not limited to the above, and other technical objects not mentioned will be clearly understood from the following disclosure by those having ordinary skill in the art.

### [Technical Solution]

A femto cell connection node according to one embodiment of the present disclosure includes: a connection state detection unit for checking a connection state of a receiving terminal when a data transmission request for the receiving terminal is received from a sending terminal; and a protocol support processing unit for changing a transmission format of data received from the sending terminal according to the connection state of the receiving terminal.

In a data transmission method of a femto cell system according to one embodiment of the present disclosure, as a data transmission request for a receiving terminal is received from a sending terminal, a femto cell connection node supporting the sending terminal checks a connection state of the receiving terminal, and the femto cell connection node determines a transmission format of the data to be transmitted to the receiving terminal according to the connection state of the receiving terminal.

A femto cell system using a femto cell according to one embodiment of the present disclosure includes: a sending terminal; and a femto cell connection node wirelessly connected to the sending terminal, receiving a data transmission request for a receiving terminal from the sending terminal, checking a connection state of the receiving terminal to determine a transmission format according to the connection state of the receiving terminal, changing a transmission format of the data received from the sending terminal according to the determined transmission format, and transmitting the data.

### [Advantageous Effects]

According to the present disclosure, in the case where a terminal connected to HeNB communicates with a terminal connected to another HeNB or directly connected to the IP network, it is possible to enable direct communication through the IP network without passing through a core network of a mobile communication service provider, thereby reducing a load of the core network and therefore increasing an overall receiving capacity of the system.

In addition, it is possible to reduce unnecessary data paths and shorten a path of data traffic, thereby decreasing data delay.

### [Description of Drawings]

FIG. 1 is a schematic view showing a femto cell system according to one embodiment of the present disclosure.
FIG. 2 shows a change of a data structure passing through the femto cell system of FIG. 1.
FIG. 3 shows an inner configuration of a femto cell connection node according to one embodiment of the present disclosure.
FIG. 4 is a flowchart illustrating a data transmission method of the femto cell system according to one embodiment of the present disclosure.
FIG. 5 is a flowchart illustrating a data transmission method of the femto cell system according to another embodiment of the present disclosure.
FIG. 6 is a flowchart illustrating a data transmission method of the femto cell system according to still another embodiment of the present disclosure.

### [Mode for Invention]

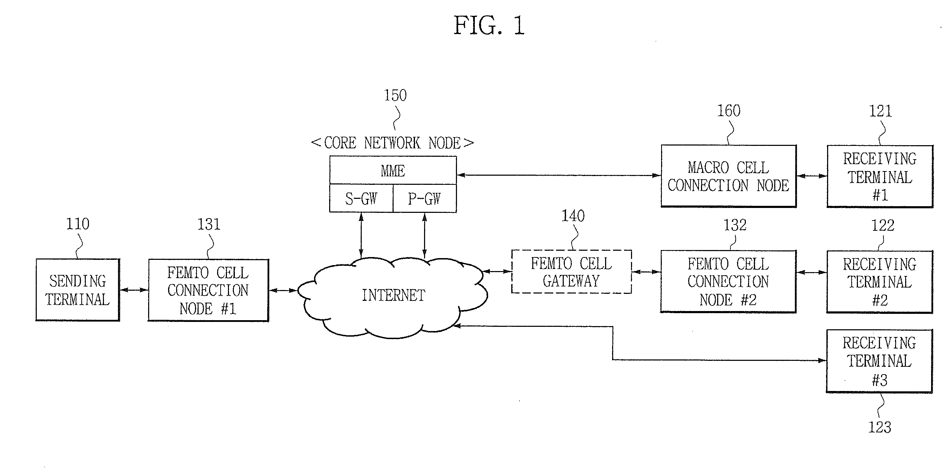

Hereinafter, a femto cell system according to a preferred embodiment of the present disclosure will be described in detail with reference to FIGS. 1 to 3.

FIG. 1 is a schematic view showing the femto cell system according to one embodiment of the present invention. FIG. 1 exemplarily shows a configuration for performing efficient data transmission using an Internet Protocol (IP) network in a mobile communication system using femto cells.

Macro cell connection nodes such as base stations, node B and evolved Node B (eNB) should be connected to a dedicated line used in a core network of a mobile communication service provider and perform voice and data communication by using the dedicated line. On the other hand, femto cell connection nodes may be connected to the core network even through an IP network installed indoors or in an office. Home NodeB (HNB) and Home eNodeB (HeNB) are representative examples of the femto cell connection node. In one embodiment, a data traffic load in a core network of a mobile communication system is reduced using the above features of the femto cell connection node, thereby improving the performance.

In the femto cell system according to one embodiment, a sending terminal 110 and a femto cell connection node#1 131 are located at a sending side. A core network such as Evolved Packet Core (EPC), or a receiving terminal#1 121 to a receiving terminal#3 123 linked to an IP network, a femto cell connection node#2 132, and a macro cell connection node 160 are located at a receiving side. Hereinafter, the receiving terminal#1 121 to the receiving terminal#3 123 are generally called a 'receiving terminal 120 ', and the femto cell connection node#1 131 and the femto cell connection node#2 132 are generally called a 'femto cell connection node 130', if required.

The sending terminal 110 sends a data transmission request for the receiving terminal 120 by call transmission to the femto cell connection node#1 131 supporting the sending terminal 110, and transmits data to the femto cell connection node#1 131 if a response is received.

The receiving terminal 120 is a device receiving data from the sending side via various paths through a core network or an IP network, and the receiving terminal#1 121, the receiving terminal#2 122, and the receiving terminal#3 123 exemplarily show various traffic paths for data receipt.

The receiving terminal#1 121 receives data transmitted from the sending terminal 110 through the macro cell connection node 160 linked with the core network. The receiving terminal#2 122 exemplarily shows a terminal connected to the IP network through the femto cell connection node#2 132, and the receiving terminal#3 123 exemplarily shows a terminal directly connected to the IP network.

The receiving terminals 120 may periodically determine using a cell ID whether it is connected to the femto cell connection node 130 (e.g., the femto cell connection node#2 132) or the macro cell connection node 160 in order to receive communication service. In addition, the determination result may be sent to an uplink device (e.g., a femto cell gateway 140 or a core network node 150) connected thereto.

The femto cell connection node#1 131 is a sending connection node wirelessly connected to the sending terminal 110 and directly connected to the IP network to operate. If the data transmission request for the receiving terminal 120 is received from the sending terminal 110, the femto cell connection node#1 131 checks a connection state of the corresponding receiving terminal 120 and determines a transmission format of the data according to the connection state of the receiving terminal 120. In addition, the femto cell connection node#1 131 changes the transmission format of the data received from the sending terminal 110 according to the determined transmission format and then sends the corresponding data to the receiving terminal 120 through the IP network or the core network.

In the case where the receiving terminal 120 may be directly or indirectly connected to the IP network without passing the core network, the femto cell connection node#1 131 may change the data received from the sending terminal 110 into a transmission format suitable for the IP network, instead of tunneling the data suitably for the core network, and then send the data to the receiving terminal 120 through the IP network. For example, the case where the sending terminal 110 communicates with the receiving terminal#2 122 or the receiving terminal#3 123 may belong to the above case.

The femto cell connection node#2 132 is a receiving connection node at the data receiving side, which is wirelessly connected to the receiving terminal 120 and plays a role of receiving the data sent from the sending terminal 110 through the IP network and sending the received data to the receiving terminal#2 122. In one embodiment, the femto cell connection node#2 132 may be Home eNodeB (HeNB, Femto Cell BTS in LTE).

The femto cell gateway 140 is a device located at the sending side or the receiving side to interconnect the femto cell connection nodes 130 managing terminals such as the sending terminal 110 and the receiving terminal 120 and to link the femto cell connection nodes 130 to the IP network. The femto cell connection node 130 may be connected through the femto cell gateway 140 to the core network node 150, or may be directly connected to the core network node 150. In one embodiment, the femto cell gateway 140 may be Home eNodeB Gateway (HeNB GW). In the case where the femto cell connection node 130 is directly connected to the core network node 150, the femto cell gateway 140 may be excluded.

The core network node 150 in the core network manages the macro cell connection node 160. In the case where the receiving terminal 120 which is a communication opponent of the sending terminal 110 is located not in a femto cell but in a macro cell, for example where the sending terminal 110 is willing to send data to the receiving terminal#1 121, the core network node 150 controls the macro cell connection node 160 to enable communication between the sending side and the receiving side. In one embodiment, the core network may include Serving Gateway (S-GW), Packet Data Network (PDN) Gateway (P-GW), Mobility Management Entity (MME) and so on, among which MME may operate as the core network node 150.

The core network node 150 (e.g., MME) may perform functions such as Non-Access Stratum (NAS) signaling or security, inter core-network signaling for mobility of terminals, P-GW/S-GW selection, selection of another MME or another SGSN at the handover accompanied with MME change or serving GPRS support node (SGSN) change, roaming, authentication and so on. The S-GW may perform functions such as management of Local Mobility Anchor (LMA) point for handover, packet routing or forwarding, and so on. The P-GW may perform functions such as packet filtering, terminal IP address allocation and so on.

The macro cell connection node 160 is a device connected to the data sending side through the core network, and is supported by the core network node 150 to send the data received from the sending terminal 110 to the receiving terminal 120. In one embodiment, the macro cell connection node 160 may be evolved Node B (eNB).

The macro cell connection node 160 (e.g., eNB) may perform functions such as radio bearer control, radio admission control, connection mobility control, frequency management such as scheduling, data encoding of IP header and user data, routing, scheduling of paging message and broadcasting message, measurement, measurement reporting and so on.

In the case where the femto cell connection node 130 (e.g., HeNB) is installed indoors, one sending terminal 110 receives outdoors mobile communication service at the macro cell connection node 160 (e.g., eNB) connected to the core network, and when entering an indoor femto cell region, the sending terminal 110 receives mobile communication service from the femto cell connection node 130 (e.g., HeNB). The femto cell connection node 130 (e.g., HeNB) is connected to the IP network by using an IP network line installed indoors and is connected to the core network of the mobile communication system through the IP network.

The femto cell system transforms the data transmission format not suitably for the core network (e.g., EPC) but suitably for the IP network so as to allow data communication directly through the IP network without passing the core network. This operation may be performed in the case where the sending terminal 110 connected to the femto cell connection node#1 131 (e.g., HeNB) communicates with the receiving terminal#2 122 connected to another femto cell connection node#2 132 (e.g., HeNB), or in the case where the sending terminal 110 communicates with the receiving terminal#3 123 directly connected to the IP network.

As described above, in the one embodiment of the present disclosure, in the case where the sending terminal 110 connected to the femto cell connection node 131 performs data communication with the receiving terminal 120 connected to another femto cell connection node 132 or directly connected to the IP network, direct communication may be performed through the IP network without passing the core network of the mobile communication system.

Therefore, the load of the core network in the mobile communication system may be reduced according to one embodiment of the present disclosure, and accordingly the overall receiving capacity may increase. In addition, since unnecessary data paths decrease to shorten the data traffic path, it is possible to reduce data delay.

Therefore, a user may reduce service costs by using the cheap IP network at maximum, instead of using an expensive interface provided by a mobile communication service provider.

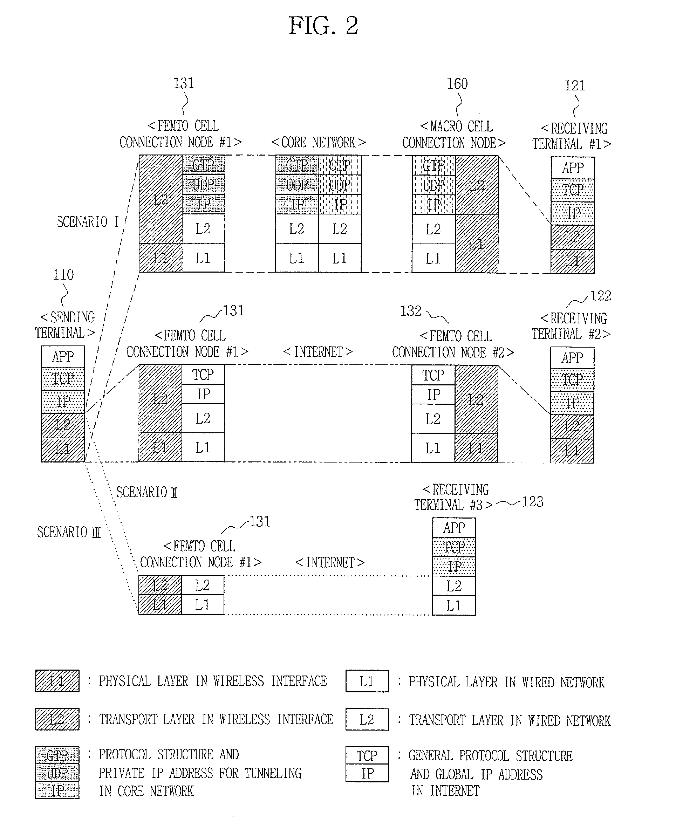

FIG. 2 shows the change of a data structure passing the femto cell system of FIG. 1.

First, the sending terminal 110 sends a data transmission request for the receiving terminal 120 to the femto cell connection node#1 131. For example, the sending terminal 110 transmits a call initiating request message (CalllnitReq) requesting data transmission for the receiving terminal 120 to the femto cell connection node#1 131. After that, the femto cell connection node#1 131 supporting the sending terminal 110 checks a connection state of the receiving terminal 120, and determines a transmission format of the data to be sent to the corresponding receiving terminal 120 according to the connection state of the receiving terminal 120.

The femto cell connection node#1 131 receiving the message sends a terminal information request message (UElnfoReq) requesting the connection state of the receiving terminal 120 to its uplink device (e.g., the femto cell gateway, the core network node or the like) and receives connection state information of the receiving terminal as a response.

The connection state of the receiving terminal 120 may be classified into any one of a core network connection state passing via the core network provided by a mobile communication service provider at data communication, and an IP network connection state using the IP network distinguished from the core network or provided by Internet Service Provider (ISP) at data communication. For example, the receiving terminal#1 121 may be considered as the core network connection state connected to the macro cell connection node connected to the core network.

Meanwhile, the receiving terminal#2 122 connected to the IP network through the femto cell connection node#2 132 and the receiving terminal#3 123 directly connected to the IP network may be considered as the IP network connection state. In the case where the receiving terminal 120 is in the IP network connection state, the femto cell connection node#1 131 receives data from the sending terminal 110 and changes the data into a transmission format suitable for the IP network.

Meanwhile, in the case where the receiving terminal 120 is in the core network connection state, the femto cell connection node#1 131 receives data from the sending terminal 110 and changes the data into a transmission format suitable for the core network.

In order to perform the above processes, each terminal may periodically determine by using the cell ID whether it is connected to the femto cell connection node 130 or the macro cell connection node 160, and notify the determination result to its uplink device (e.g., the femto cell gateway 140, the core network node 150 or the like).

At this time, each terminal may receive the cell ID from the connection node (e.g., the femto cell connection node 130 or the macro cell connection node 160) connected thereto.

FIG. 2 is for illustrating the data format changing process according to the present disclosure.

Referring to FIG. 2, the femto cell connection node#1 131 is connected to an IP network installed indoors, and is connected to the core network (e.g., EPC) of a mobile communication service provider through the IP network. In this structure, it is assumed that the femto cell connection node#1 131 of the sending side, the femto cell connection node#2 132 of the receiving side, and the core network are all included in the data traffic path.

For example, if data is transmitted in the order of the sending side → the core network → the IP network → the receiving side, the process is as follows.

First, the femto cell connection node#1 131 may tunnel the data received from the sending terminal 110 in the GPRS Tunneling Protocol/User Datagram Protocol/Internet Protocol (GTP/UDP/IP) manner and send the data to the core network. The traffic of the data passing via the core network is transmitted through the IP network again to the femto cell connection node#2 132 (e.g., HeNB) where the receiving terminal 120 which is an opponent is located.

At this time, the data is changed again into a Transmission Control Protocol/Internet Protocol (TCP/IP) format used in the IP network and then transmitted in order to pass via the IP network. After that, the traffic of the data reaching the opponent femto cell connection node#2 132 (e.g., HeNB) is transmitted to the receiving terminal 120.

In the case where any one of the sending terminal 110 which is willing to send data and the opponent receiving terminal 120 does not support the femto cell connection node 130 (e.g., HeNB), the data should be transmitted basically via the core network, similar to the above process. The scenario I exemplarily shows the format change of a data structure at such a data flow.

However, in the case where both of the sending terminal 110 which is willing to communicate and the receiving terminal 120 are connected to the femto cell connection node 130 (e.g., HeNB), or in the case where any one of the sending terminal 110 and the receiving terminal 120 is directly connected to the IP network, the scenario I always passing via the core network is not efficient.

Therefore, in one embodiment of the present disclosure, a scenario II or a scenario III is suggested as a data path along which data may be efficiently transmitted using the IP network.

In the case where both of the sending terminal 110 which is willing to send or receive data and the receiving terminal 120 are connected to the femto cell connection node 130 (e.g., HeNB), or in the case where one terminal is connected to the femto cell connection node 130 (e.g., HeNB) and the other terminal is directly connected to the IP network, the following scenario II or III may be applied.

In the scenario II or III according to one embodiment of the present disclosure, the sending terminal 110 and the receiving terminal 120 respectively need to check whether they are connected to the femto cell connection node 130. This may be determined using the cell ID received from the femto cell connection node 130. Here, the femto cell connection node 130 has a cell ID distinguished from the macro cell connection node 160.

For example, if the macro cell connection nodes (e.g., eNB) have ID of 0x0001-0x1eee, the femto cell connection nodes (e.g., HeNB) are endowed with cell IDs over 0x2000, and the IDs of the femto cell connection nodes are distinguished from the macro cell connection nodes.

Each terminal may receive a message notifying the connection node information such as a paging channel message from the connection node connected thereto, check its cell ID, and then determine whether it is connected to the femto cell connection node (e.g., HeNB) or the macro cell connection node (e.g., eNB).

Each terminal needs to periodically notify to the uplink deice (e.g., MME) whether the connection node connected thereto at the present is the macro cell connection node (e.g., eNB) or the femto cell connection node (e.g., HeNB).

For this purpose, the core network may periodically request the corresponding information to each terminal, or each terminal may periodically notify the corresponding information to the core network.

The femto cell connection node 130 (e.g., HeNB) of the sending terminal 110 sending data checks whether the receiving terminal 120 is connected to the femto cell connection node (e.g., HeNB) or directly connected to the IP network, and then transmits data according to the scenario II or III of FIG. 2.

In the case where the receiving terminal 120 is connected to the macro cell connection node 160 (e.g., eNB), the data may be transmitted according to the scenario I.

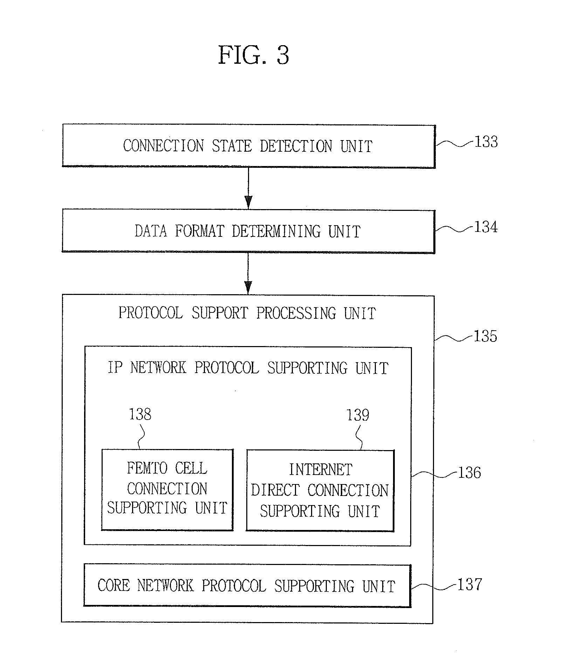

Hereinafter, the data format change will be described in more detail with reference to FIG. 3.

FIG. 3 shows an inner configuration of the femto cell connection node of FIG. 1, and an inner configuration of the femto cell connection node#1 131 located at the sending side is illustrated as an example.

As described above, in the case where the opponent receiving terminal 120 is connected to the femto cell connection node 130 (e.g., femto cell connection node#2 132) (for example, the receiving terminal#2 122) or directly connected to the IP network (for example, the receiving terminal#3 123), the femto cell connection node#1 131 of the sending side may communicate with the receiving side directly through the IP network. At this time, the femto cell connection node#1 131 uses a signaling technique to check a state of the receiving terminal 120 which is an opponent for data exchange.

If it is recognized that communication is allowed without passing through the core network provided by a mobile communication service provider, the femto cell connection node#1 131 changes a data format suitably for the checked state of the receiving side. For example, this operation may be performed in the case where the receiving terminal 120 is directly connected to the IP network or located at a local network after checking their states.

In other words, the femto cell connection node#1 131 allows communication using the IP network with an efficient data format by making the data in a format available in the IP network, not in a format suitable for the core network interface of the mobile communication system.

Referring to FIG. 3, the femto cell connection node#1 131 includes a connection state detection unit 133 and a protocol support processing unit 135, and a data format determining unit 134 may be further included.

If a data transmission request for the receiving terminal 120 is received from the sending terminal 110, the connection state detection unit 133 checks a connection state of the receiving terminal 120. For example, if a call initiating request message (CallInitReq) requesting data transmission for the receiving terminal 120 is received from the sending terminal 110, the connection state detection unit 133 generates a terminal information request message (UEInfoReq) requesting a connection state of the receiving terminal 120 as a response. The connection state detection unit 133 may transmit the terminal information request message (UEInfoReq) to the uplink device (e.g., MME) and then receive the connection state of the receiving terminal 120 from the corresponding uplink device (e.g., MME) as a response to the terminal information request message (UEInfoReq).

The connection state of the receiving terminal 120 may be classified into a core network connection state and an IP network connection state. Here, the core network connection state is a state passing via the core network provided by the mobile communication service provider at data communication, and the IP network connection state is a state distinguished from the core network or passing via the IP network provided by the ISP at data communication.

Here, the core network connection state may mean a state where the receiving terminal 120 is connected to the macro cell connection node (e.g., receiving terminal#1 121).

Meanwhile, the IP network connection state may mean a state where the receiving terminal 120 is connected to the femto cell connection node connected to the IP network (e.g., the receiving terminal#2 122), or a state directly connected to the IP network (e.g., the receiving terminal#3 123).

The data format determining unit 134 determines a transmission format of the data transmitted from the sending terminal 110 to the receiving terminal 120 according to the connection state of the receiving terminal 120 checked by the connection state detection unit 133, and notifies the result to the protocol support processing unit 135.

The protocol support processing unit 135 changes a transmission format of the data received from the sending terminal 110 according to the connection state of the corresponding receiving terminal 120 so that the data may be transmitted to the receiving terminal 120. In the case where the receiving terminal 120 is directly or indirectly connected to the IP network (e.g., the receiving terminal#2 122 or the receiving terminal#3 123), the protocol support processing unit 135 may change the data received from the sending terminal 110 into a transmission format suitable for the IP network and then transmit the data to the receiving terminal 120 through the IP network.

The protocol support processing unit 135 may include an IP network protocol supporting unit 136 and a core network protocol supporting unit 137. The IP network protocol supporting unit 136 receives data from the sending terminal 110 and changes the data into a transmission format suitable for the IP network in the state where the receiving terminal 120 is in the IP network connection state. The IP network protocol supporting unit 136 may include a femto cell connection supporting unit 138 and an IP direct connection supporting unit 139.

In the case where it is checked that the receiving terminal 120 is in a state of being connected to the femto cell connection node#2 132 in the connection state detection unit 133 (e.g., the receiving terminal#2 122), the femto cell connection supporting unit 138 in the femto cell connection node#1 131 of the sending side changes a protocol structure as in the scenario II of FIG. 2.

In the data received from the sending terminal 110, the protocol region L1 (Physical Layer)/L2 (Transport Layer) for wireless region transmission is changed to a protocol structure L1 (Physical Layer)/L2 (Transport Layer)/TCP (Transmission Control Protocol)/IP (Internet Protocol). In the changed protocol structure, L1/L2 is for the transmission in a wired network, and TCP/IP is an IP protocol structure, where IP is an address for the connection to the femto cell connection node#2 132 connected to the receiving terminal 120.

In the state where the receiving terminal 120 is in a state directly connected to the IP network (e.g., receiving terminal#3 123), the IP direct connection supporting unit 139 changes a transmission format of the data as in the scenario III. In the data received from the sending terminal 110, the protocol portion L1 (Physical Layer)/ L2 (Transport Layer) for the wireless region transmission is changed to the L1 (Physical Layer)/L2 (Transport Layer) in a wired network.

Compared with the above, the core network protocol supporting unit 137 receives data from the sending terminal 110 and changes the data into a transmission format suitable for the core network in the case where the receiving terminal 120 is in the core network connection state (e.g., the receiving terminal#1 121).

For example, the core network protocol supporting unit 137 of the femto cell connection node#1 131 changes, in the data received from the sending terminal 110, the protocol portion L1 (Physical Layer)/L2 (Transport Layer) for the wireless region transmission to a protocol structure L1 (Physical Layer)/L2 (Transport Layer)/GTP (GPRS Tunneling Protocol)/UDP (User Datagram Protocol)/IP (Internet Protocol) as in the scenario I. In the changed protocol, L1/L2 is for the transmission in a wired network, GTP/UDP is for the transmission in the core network, and IP is a private IP address.

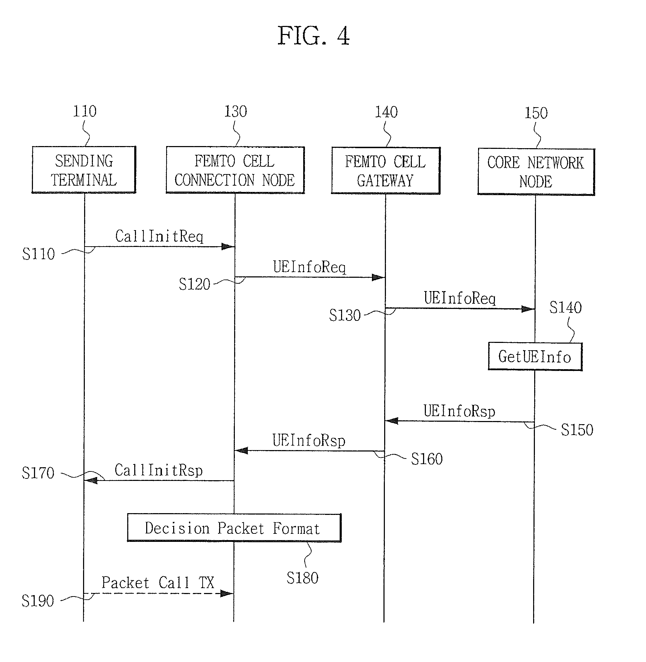

The femto cell connection node#1 131 of the sending terminal 110 may check whether the receiving terminal 120 is connected to the femto cell connection node 130 (e.g., HeNB) or directly connected to the IP network, by means of the signaling technique of FIGS. 4 to 6.

Hereinafter, the data transmission method of the femto cell system according to one embodiment of the present disclosure will be described in detail with reference to FIGS. 4 to 6.

FIG. 4 is a flowchart for illustrating a data transmission method of the femto cell system according to one embodiment of the present disclosure. FIG. 4 exemplarily shows a process in which, in the case where the femto cell gateway 140 (e.g., HeNB GW) is present, the femto cell connection node 130 (e.g., HeNB) of the sending side checks connection state information of the receiving terminal 120 and determines a transmission method of data such as traffic and packet.

The connection state information may be information notifying whether the receiving terminal 120 is connected to the connection node 160 (e.g., eNB) supporting macro cells, connected to the connection node 130 (e.g., HeNB) supporting femto cells, or directly connected to the IP network where a connected location may be checked.

The femto cell connection node 130 of the sending side checks the connection state information of the receiving terminal 120, which may be obtained from the core network. After that, the femto cell connection node 130 may enhance the transmission efficiency by selectively applying two manners, namely a manner of transmitting data via the core network provided by a mobile communication service provider and a manner of sending data using the IP network distinguished from the core network, provided by a general ISP or provided through an IP, according to circumstances.

In addition, by using the above manners, it is possible to reduce a load by not changing user data unnecessarily or by allowing the user data not to pass the core network.

FIG. 4 exemplarily shows the case where the sending terminal 110 transmits data. In one embodiment, the Mobility Management Entity (MME) operated as the core network node 150 plays a role of storing user location information and manages a terminal in Tracking Area (TA) unit. If TA is changed, the terminal notifies TA information about its location to the MME through a Tracking Area Update (TAU) process. At a specific point of time, the terminal registers its location to only one MME.

The sending terminal 110 transmits a call initiating request message (CallInitReq) requesting data transmission for the receiving terminal 120 to the connected femto cell connection node 130 (S110). The call initiating request message (CallInitReq) is a message requesting the sending terminal 110 to make a call to a desired opponent. The call initiating request message (CallInitReq) may include ID of the receiving terminal 120 which is a call opponent, service ID, kind of service, and so on.

As the call initiating request message (CallInitReq) is received, the femto cell connection node 130 generates a terminal information request message (UEInfoReq) inquiring a connection state of the receiving terminal 120. After that, the femto cell connection node 130 transmits the terminal information request message (UEInfoReq) to the uplink devices, namely the femto cell gateway 140 and the core network node 150, in order (S120, S130), and receives a connection state of the receiving terminal 120 from the femto cell gateway 140 as a response (S140 to S160).

In detail, the femto cell connection node 130 receives the call initiating request message (CallInitReq) from the sending terminal 110 and then generates transmits the terminal information request message (UEInfoReq) to the femto cell gateway 140 (S120). The terminal information request message (UEinfoReq) is a message requesting connection state information of a desired opponent. The terminal information request message (UEinfoReq) may include ID of the receiving terminal 120 which is a call opponent, service ID, kind of service, and so on.

The femto cell gateway 140 receives the terminal information request message (UEinfoReq) from the femto cell connection node 130 and then transmits the message to the core network node 150 (S130). The terminal information request message (UEInfoReq) is a message requesting connection state information of the receiving terminal 120 which is a call opponent. The terminal information request message (UEinfoReq) may include ID of the receiving terminal 120 which is a call opponent, service ID, kind of service, and so on.

The core network node 150 receives the terminal information request message (UEInfoReq) from the femto cell gateway 140 and then checks the connection state information of the receiving terminal 120 (S140). Here, the core network node 150, the MME may recognize the connection state information or location information of the receiving terminal 120.

In other words, the core network node 150 may recognize whether the receiving terminal 120 is connected in a state of the receiving terminal#2 122 shown in FIGS. 1 and 2 (scenario II) or connected in a state of the receiving terminal#1 121 (scenario I) according to the connection state information. In the case where the receiving terminal 120 is registered in a specific server connected to the IP network or connected to the server, it may be understood that it is in a connection state like the receiving terminal#3 123.

The core network node 150 checks the connection state information of the receiving terminal 120 and then transmits the terminal information notifying message (UEInfoRsp) to the femto cell gateway 140 (S150). The terminal information notifying message (UEInfoRsp) is a response message notifying the connection state information of the receiving terminal 120. The terminal information notifying message (UEInfoRsp) includes the connection state information of the receiving terminal 120 checked by the core network node 150.

The femto cell gateway 140 receives the terminal information notifying message (UEInfoRsp) from the core network node 150, and then transmits the terminal information notifying message (UEInfoRsp) to the femto cell connection node 130 (S160). The terminal information notifying message (UEInfoRsp) is a response message notifying the connection state information of the receiving terminal 120 and includes the connection state information of the receiving terminal 120 checked by the core network node 150.

The femto cell connection node 130 receives the terminal information notifying message (UEInfoRsp) from the femto cell gateway 140, and then transmits the call initiating response message (CallInitRsp) to the sending terminal 110 (S170). The call initiating response message (CallInitRsp) is a message notifying that the sending terminal 110 may send user data.

Next, the femto cell connection node 130 determines a transmission format of user data to be transmitted according to the connection state information of the receiving terminal 120 included in the terminal information notifying message (UElnfoRsp) (S180).

In the state where the receiving terminal 120 is connected through the femto cell connection node 130 similar to the receiving terminal#2 122, the data may be transmitted in a packet format as in the scenario II of FIG. 2.

Or else, if the connection state information is identical to the receiving terminal#1 121, in other words if the receiving terminal 120 is in a state of being connected to the macro cell connection node 160, the data may be transmitted in a packet format as in the scenario I.

Or else, if the connection state information is identical to the receiving terminal#3 123, in other words if the receiving terminal 120 is in a state of being connected through the IP network, the data may be transmitted in a packet format as in the scenario III. In this case, the core network node 150 or the femto cell gateway 140 may recognize the corresponding connection state as a specific server or the like on the IP network notifies the state where the receiving terminal 120 is registered or connected.

The determining the packet format (S180) may be executed at the same time as or before the transmitting the call initiating response message (CallInitRsp) (S170), or may be executed after a packet call transmission message (Packet Call Tx) is received (S190). If the sending terminal 110 receiving the call initiating response message (CallInitRsp) transmits the user data to be sent to the receiving side by using the packet call transmission message (Packet Call Tx) (S190), the femto cell connection node 130 transmits the corresponding data to the receiving side in the determined packet format.

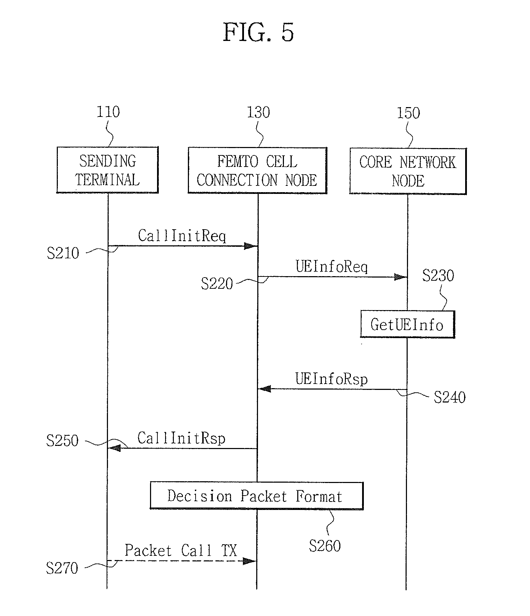

FIG. 5 is a flowchart for illustrating a data transmission method of the femto cell system according to another embodiment of the present disclosure. FIG. 5 shows the process of checking the connection state information in a way that the femto cell connection node 130 (e.g., HeNB) transmits the terminal information request message (UEInfoReq) directly to the core network node 150 (e.g., MME) without passing through the femto cell gateway 140 (e.g., HeNB GW). The femto cell connection node 130 may be directly connected to and communicate with the core network node 150 without passing through the femto cell gateway 140.

The sending terminal 110 transmits the call initiating request message (CallInitReq) to the connected femto cell connection node 130 (S210). The call initiating request message (CallInitReq) is a message requesting the sending terminal 110 to communicate with a desired opponent. The call initiating request message (CallInitReq) includes ID of the receiving terminal 120 which is a call opponent, service ID, kind of service, and so on.

The femto cell connection node 130 receives the call initiating request message (CallInitReq) from the sending terminal 110 and then transmits the terminal information request message (UEInfoReq) to the core network node 150 (S220). The terminal information request message (UEInfoReq) is a message requesting connection state information of a desired opponent. The terminal information request message (UEInfoReq) includes ID of the receiving terminal 120 which is a call opponent, service ID, kind of service, and so on.

The core network node 150 receives the terminal information request message (UEInfoReq) from the femto cell connection node 130 and then checks the connection state information of the receiving terminal 120 (S230).

The core network node 150 may recognize the connection state information or location information of the receiving terminal 120, and may recognize whether the receiving terminal 120 is connected in the state of the receiving terminal#1 121 of FIGS. 1 and 2 or connected in the state of the receiving terminal#2 122 according to the connection state information. In the case where the receiving terminal 120 is registered in a specific server connected to the IP network or connected to the corresponding server, it may be understood to be in same connection state as the receiving terminal#3 123.

The core network node 150 checks the connection state information of the receiving terminal 120 and then transmits the terminal information request message (UEInfoRsp) to the femto cell connection node 130 (S240). The terminal information request message (UEInfoRsp) is a response message notifying the connection state information of the receiving terminal 120 and includes the connection state information of the receiving terminal 120 checked by the core network node 150.

The femto cell connection node 130 receives the terminal information request message (UEInfoRsp) from the core network node 150, and then transmits the call initiating response message (CallInitRsp) to the sending terminal 110 (S250). The call initiating response message (CallInitRsp) is a message notifying that the sending terminal 110 may send the user data.

The femto cell connection node 130 determines a packet format of the user data to be transmitted according to the connection state information of the receiving terminal 120 included in the received terminal information notifying message (UEinfoRsp) (S260).

For example, if the connection state information is identical to the receiving terminal#2 122, in other words if the receiving terminal 120 is in a state of being connected through the femto cell connection node 130 (e.g., HeNB), the data may be transmitted in the packet format as in the scenario II of FIG. 2.

Or else, if the connection state information is identical to the receiving terminal#1 121, in other words if the receiving terminal 120 is in a state of being connected to the macro cell connection node 160 (e.g., eNB) of the core network, the data may be transmitted in the packet format as in the scenario I of FIG. 2.

Or else, if the connection state information is identical to the receiving terminal#3 123, in other words if the receiving terminal 120 is in a state of being connected through the IP network, the data may be transmitted in the packet format as in the scenario III of FIG. 2.

In these cases, the uplink device of the core network node 150 (or, the femto cell gateway 140) may recognize whether a terminal is registered or connected through a specific server.

The determining packet format (S260) of FIG. 5 may be executed at the same time as or before the transmitting the call initiating response message (CallInitRsp) (S250), or after the packet call transmission message (Packet Call Tx) is received (S270).

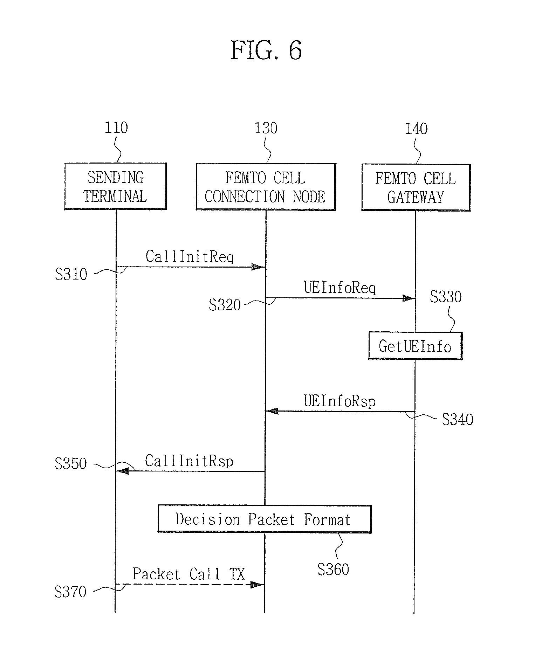

FIG. 6 is a flowchart for illustrating a data transmission method of the femto cell system according to still another embodiment of the present disclosure. FIG. 6 shows the process of checking the connection state information in a way of sending a terminal information request message (UEInfoReq) to the femto cell gateway 140 without passing through the core network node 150.

Here, the femto cell gateway 140 (e.g., HeNB GW) may store the connection state information or location information of terminals connected through the femto cell connection node 130 managed by the femto cell gateway 140, and may download (or, receive) and store the connection state information or location information from the core network node 150.

For example, in FIG. 6, terminals connected to the core network or the IP network through the femto cell connection node 130 managed by the femto cell gateway 140 perform a process of notifying the core network node 150 through the corresponding femto cell gateway 140 that they are connected to the corresponding femto cell gateway 140. At this time, the femto cell gateway 140 may recognize that the receiving terminal 120 is connected through the femto cell connection node 130, and may store the connection state information of the receiving terminal 120.

Therefore, in the case where the sending terminal 110 attempts a call, if the opponent receiving terminal 120 is connected through the femto cell connection node 130 managed by the femto cell gateway 140 at the present, the connection state information of the receiving terminal 120 may be found at the femto cell gateway 140. The receiving terminal 120 may also recognize the connection state information of the sending terminal 110 managed by the femto cell gateway 140 at the femto cell gateway 140.

If the connection state information of the receiving terminal 120 may not be recognized in the femto cell gateway 140, the femto cell gateway 140 may transmit a message requesting the connection state information of the receiving terminal 120 again to the core network node 150 (e.g., MME).

The sending terminal 110 transmits the call initiating request message (CallInitReq) to the connected femto cell connection node 130 (S310). The call initiating request message (CallInitReq) is a message requesting the sending terminal 110 to make a call to a desired opponent. The call initiating request message (CallInitReq) may include ID of the receiving terminal 120 which is a call opponent, service ID, kind of service, and so on.

The femto cell connection node 130 receives the call initiating request message (CallInitReq) from the sending terminal 110, and then transmits the terminal information request message (UEInfoReq) to the femto cell gateway 140 (S320). The terminal information request message (UEInfoReq) is a message requesting the connection state information of a desired opponent. The terminal information request message (UEInfoReq) may include ID of the receiving terminal 120 which is a call opponent, service ID, kind of service, and so on.

The femto cell gateway 140 receives the terminal information request message (UEInfoReq) from the femto cell connection node 130, and then checks the connection state information of the receiving terminal 120 (S330). The femto cell gateway 140 may recognize the connection state information or location information of the receiving terminal 120, and may recognize whether the receiving terminal 120 is connected in the state of the receiving terminal#1 121 of FIGS. 1 and 2 or connected in the state of the receiving terminal#2 122 according to the connection state information.

In the state where the receiving terminal 120 is registered in a specific server connected to the IP network or connected to the corresponding server, it may be recognized to be in the same connection state as the receiving terminal#3 123. In the case where the information of the receiving terminal 120 is not found in the femto cell gateway 140, the femto cell connection node 130 may transmit the terminal information request message (UEInfoReq) to the core network node 150 so that the connection state information of the corresponding receiving terminal 120 may be recognized.

The femto cell gateway 140 checks the connection state information of the receiving terminal 120 and then transmits the terminal information notifying message (UEInfoRsp) to the femto cell connection node 130 (S340). The terminal information notifying message (UEInfoRsp) is a response message notifying the connection state information of the receiving terminal 120, and includes the connection state information of the receiving terminal 120 checked by the femto cell gateway 140.

The femto cell connection node 130 receives the terminal information notifying message (UEInfoRsp) from the femto cell gateway 140, and then transmits the call initiating response message (CallInitRsp) to the sending terminal 110 (S350). The call initiating response message (CallInitRsp) is a message notifying that the sending terminal 110 may send user data.

Meanwhile, the femto cell connection node 130 determines a packet format of the user data to be transmitted according to the connection state information of the receiving terminal 120 included in the received terminal information notifying message (UEinfoRsp) (S360).

For example, if the connection state information is identical to the receiving terminal#2 122, in other words if the receiving terminal 120 is in the state of being connected through the femto cell connection node 130 (e.g., HeNB), the data may be transmitted in the packet format as in the scenario II of FIG. 2.

Or else, the connection state information is identical to the receiving terminal#1 121, in other words if the receiving terminal 120 is in the state of being connected to the macro cell connection node 160 (e.g., eNB), the data may be transmitted in the packet format as in the scenario I of FIG. 2.

Or else, if the connection state information is identical to the receiving terminal#3 123, in other words if the receiving terminal 120 is in the state of being connected through the IP network and the registration or connection state of the terminal is transmitted through a specific server so that the femto cell gateway 140 (or, the core network node 150) recognizes the corresponding connection state, the data may be transmitted in the packet format as in the scenario III of FIG. 2.

The determining packet format determining (S360) of FIG. 6 may be executed at the same time as or before the transmitting the call initiating response message (CallInitRsp) (S350), or may be executed after the packet call transmission message (Packet Call Tx) is received from the sending terminal 110 (S370).

In the case where the data is transmitted according to the scenario II or III by means of the signaling manner shown in FIGS. 4 to 6, the sending terminal 110 transmits data in a data format suitable for the core network without any change from the conventional case.

First, the femto cell connection node 130 of the sending side receiving data from the sending terminal recognizes that the data transmission manner determined according to the connection state information of the receiving terminal 120 is the scenario II or III.

After that, the femto cell connection node 130 changes the data format as in the method of FIGS. 1 and 2 without making a data format in a conventional tunneling manner and transmits the data to the femto cell connection node 130 (e.g., HeNB) to which the receiving terminal 120 is connected, so that the data may pass through the IP network.

The femto cell connection node 130 of the receiving side which receives the data forwards the received data to the receiving terminal 120.

In particular, in the case where the receiving terminal 120 is directly connected to the IP network as in the receiving terminal#3 123 of FIG. 1, the femto cell connection node 130 of the sending side recognizes the scenario III. In addition, the femto cell connection node 130 changes only the L1/L2 protocol portion to pass through the IP network, without making data in a conventional tunneling manner, and transmits the data to the receiving terminal 120. At this time, since the receiving terminal 120 is not connected to the femto cell connection node 130, the data may be directly received.

Though the embodiments of the present disclosure have been described with the accompanying drawings, the present disclosure is not limited to HeNB or any specific base station but may be applied all kinds of connection nodes connected to the IP network. In addition, the present disclosure may include all kinds of connection manners, without being limited to wireless connection techniques such as CDMA, OFDMA, and TDMA, and may similarly include all kinds of service manners such as WiBro, LTE, and WiMax, without being limited to a specific service.

While the exemplary embodiments have been shown and described, it will be understood by those skilled in the art that various changes in form and details may be made thereto without departing from the spirit and scope of the present disclosure as defined by the appended claims.

In addition, many modifications can be made to adapt a particular situation or material to the teachings of the present disclosure without departing from the essential scope thereof. Therefore, it is intended that the present disclosure not be limited to the particular exemplary embodiments disclosed as the best mode contemplated for carrying out the present disclosure, but that the present disclosure will include all embodiments falling within the scope of the appended claims.

### [Industrial Applicability]

The femto cell connection node, the femto cell system, and the data transmission method of the system according to the present disclosure may reduce the load of a core network, accordingly increase an overall receiving capacity of the system, and reduce unnecessary data paths to shorten a path of data traffic, thereby reducing the data delay.

## Claims

1. A femto cell connection node, comprising:
a connection state detection unit for checking a connection state of a receiving terminal when a data transmission request for the receiving terminal is received from a sending terminal; and
a protocol support processing unit for changing a transmission format of data received from the sending terminal according to the connection state of the receiving terminal.

2. The femto cell connection node according to claim 1, wherein, in the case where the receiving terminal is directly or indirectly connected to an Internet Protocol (IP) network, the protocol support processing unit changes the data received from the sending terminal into a transmission format suitable for the IP network and transmits the data to the receiving terminal through the IP network.

3. The femto cell connection node according to claim 1, further comprising a data format determining unit for determining a transmission format of the data to be transmitted to the receiving terminal according to the connection state of the receiving terminal checked by the connection state detection unit and notifying the transmission format of the data to the protocol support processing unit.

4. The femto cell connection node according to claim 1, wherein the connection state detection unit determines the connection state of the receiving terminal as at least one of a core network connection state passing via a core network provided by a mobile communication service provider at data communication and an IP network connection state passing via the IP network distinguished from the core network at data communication.

5. The femto cell connection node according to claim 4, wherein the connection state detection unit determines the IP network connection state as a state where the receiving terminal is connected to a femto cell connection node connected to the IP network or a state where the receiving terminal is directly connected to the IP network.

6. The femto cell connection node according to claim 2, wherein the protocol support processing unit includes an IP protocol supporting unit for changing the data received from the sending terminal into a transmission format suitable for the IP network.

7. The femto cell connection node according to claim 6, wherein, in the case where the receiving terminal is in a state of being connected to the femto cell connection node, the IP protocol supporting unit includes a femto cell connection supporting unit for changing, in the data received from the sending terminal, a protocol portion L1 (Physical Layer)/ L2 (Transport Layer) for wireless communication into a protocol structure L1 (Physical Layer)/L2 (Transport Layer)/TCP (Transmission Control Protocol)/IP (Internet Protocol), and
wherein the L1/L2 of the changed protocol structure is for transmission in a wired network, the TCP/IP is for an IP protocol, and the IP is an IP address for the connection to the femto cell connection node connected to the receiving terminal.

8. The femto cell connection node according to claim 1, wherein the connection state detection unit receives the connection state of the receiving terminal, checked through messages periodically notified by the receiving terminal, from an uplink device.

9. The femto cell connection node according to claim 1, wherein the connection state detection unit receives a call initiating request message requesting data transmission from the sending terminal to the receiving terminal, generates a terminal information request message inquiring a connection state of the receiving terminal and transmitting the terminal information request message to an uplink device, receives a response message from the uplink device, and receives the connection state of the receiving terminal.

10. The femto cell connection node according to claim 9, wherein, in the case where the connection state of the receiving terminal is not checked, the connection state detection unit transmits the terminal information request message to the uplink device again.

11. The femto cell connection node according to claim 9, wherein the connection state detection unit generates the terminal information request message including at least one of ID of the receiving terminal, service ID and kind of service and transmits the terminal information request message to the uplink device.

12. The femto cell connection node according to claim 9, wherein the connection state detection unit receives the connection state of the receiving terminal by receiving a response message including the connection state information of the receiving terminal, checked by a core network node which is the uplink device.

13. The femto cell connection node according to claim 12, wherein the connection state detection unit receives the connection state of the receiving terminal by receiving the response message including the connection state information of the receiving terminal, checked by the core network node which is a mobility management entity (MME) which checks the connection state information or location information of the receiving terminal.

14. A data transmission method of a femto cell system by a femto cell connection node, the data transmission method comprising:
receiving a data transmission request for a receiving terminal from a sending terminal;
checking a connection state of the receiving terminal; and
determining a transmission format of the data to be transmitted to the receiving terminal according to the connection state of the receiving terminal.

15. The data transmission method of a femto cell system according to claim 14, wherein said checking of a connection state of the receiving terminal recognizes the connection state of the receiving terminal as at least one of a core network connection state passing via a core network provided by a mobile communication service provider at data communication and an IP network connection state passing via the IP network distinguished from the core network at data communication.

16. The data transmission method of a femto cell system according to claim 15, further comprising:
changing the data received from the sending terminal into a transmission format suitable for the IP network, in the case where the receiving terminal is in a state of being connected to the IP network.

17. The data transmission method of a femto cell system according to claim 15, wherein the IP network connection state means a state where the receiving terminal is connected to a femto cell connection node connected to the IP network or a state of being directly connected to the IP network.

18. The data transmission method of a femto cell system according to claim 17, further comprising:
changing, in the data received from the sending terminal, a protocol portion L1 (Physical Layer)/ L2 (Transport Layer) for wireless communication into a protocol structure L1 (Physical Layer)/L2 (Transport Layer)/TCP (Transmission Control Protocol)/IP (Internet Protocol), in the case where the receiving terminal is in a state of being connected to the femto cell connection node,
wherein the L1/L2 of the changed protocol structure is for transmission in a wired network, the TCP/IP is for an IP protocol, and the IP is an IP address for the connection to the femto cell connection node connected to the receiving terminal.

19. The data transmission method of a femto cell system according to claim 14, further comprising:
checking whether the sending terminal or the receiving terminal is connected to a femto cell connection node or a macro cell connection node by using a cell ID received from the connection node; and
periodically notifying the checked result to an uplink device.

20. The data transmission method of a femto cell system according to claim 14, wherein said the checking of a connection state of the receiving terminal includes:
receiving a call initiating request message requesting data transmission from the sending terminal to the receiving terminal;
transmitting a terminal information request message inquiring a connection state of the receiving terminal to an uplink device; and
receiving the connection state information of the receiving terminal by receiving a response message from the uplink device.

21. The data transmission method of a femto cell system according to claim 20, wherein said checking of a connection state of the receiving terminal transmits the terminal information request message to the uplink device again, in the case where the connection state of the receiving terminal is not checked.

22. The data transmission method of a femto cell system according to claim 20, wherein the terminal information request message includes at least one of ID of the receiving terminal, service ID and kind of service.

23. The data transmission method of a femto cell system according to claim 20, wherein said checking of a connection state of the receiving terminal receives the connection state of the receiving terminal by receiving a response message including the connection state information of the receiving terminal, checked by a core network node which is the uplink device,
wherein the core network node is a mobility management entity (MME) for checking the connection state information or location information of the receiving terminal.

24. A femto cell system using a femto cell, comprising:
a sending terminal; and
a femto cell connection node wirelessly connected to the sending terminal, receiving a data transmission request for a receiving terminal from the sending terminal, checking a connection state of the receiving terminal to determine a transmission format according to the connection state of the receiving terminal, changing a transmission format of the data received from the sending terminal according to the determined transmission format, and transmitting the data.

25. The femto cell system according to claim 24, wherein, in the state where the receiving terminal is directly or indirectly connected to an Internet protocol (IP) network, the femto cell connection node converts the data received from the sending terminal into a transmission format suitable for the IP network and transmits the data to the receiving terminal through the IP network.
